# EUROPEAN PATENT APPLICATION

(11) **EP 3 915 515 A1**
(43) Date of publication of application: **01.12.2021**
(21) Application number: 20176963.5
(22) Date of filing: 28.05.2020
(51) Int. Cl.: A61C 17/34, A61C 17/22, A46B 13/02, A61N 1/18

(54) **CLEANING AND/OR TREATMENT UNIT FOR AN ORAL CLEANING AND/OR TREATMENT DEVICE**

(71) Applicant: Koninklijke Philips N.V., 5656 AG Eindhoven (NL)
(72) Inventor: GOTTENBOS, Bart, 5656 AE Eindhoven (NL); JOHNSON, Mark Thomas, 5656 AE Eindhoven (NL); BRANDAO SILVA, Priscilla, 5656 AE Eindhoven (NL)
(74) Representative: Philips Intellectual Property & Standards

(57) **Abstract**

An oral cleaning and/or treatment unit (10), e.g. a head for an oral cleaning and/or treatment device, includes electrodes (18a, 18b) for emitting RF energy for providing an oral cleaning and/or treatment function. The unit includes at least a first (14a) and second (14b) protruding member, which protrude in a same general direction away from a base or support structure (12). Each comprises one or more electrodes for generating an RF field. The protruding members are adapted to have a flexibility that permits the member to resiliently bend or deform in a direction perpendicular the direction of extension of the member out of the support surface ('lateral direction').

## Description

### FIELD OF THE INVENTION

The present invention relates to a cleaning and/or treatment unit for an oral cleaning and/or treatment device, in particular an oral cleaning and/or treatment device employing electromagnetic energy for a cleaning and/or treatment function.

### BACKGROUND OF THE INVENTION

Electromagnetic emissions can be used to provide a cleaning function in the oral cavity. In particular, an oral cleaning device can include a cleaning or treatment unit, such as a head portion, for insertion into an oral cavity of a user, which cleaning or treatment unit portion includes two or more electrodes coupled to a signal generator (e.g. radio frequency). The signal generator drives the electrodes with an alternating RF drive signal which causes an RF field to be generated between and around the electrodes.

When the RF field interacts with surfaces of the teeth and gums, it provides a cleaning function by loosening the bonds between impurities and the surfaces in the mouth. In particular, RF fields generated in this way can remove dental plaque, and also dental calculus. Staining of teeth can also be reduced.

US10201701B2 describes a prior art electric toothbrush, and this is shown in Fig. 1. The toothbrush comprises a platen 6, an RF generator 51, two RF electrodes 3, 4, and a dielectric barrier 2 situated between the two RF electrodes in the form of a silicone strip. The toothbrush also includes bristles 5. The dielectric barrier has a height which extends near to the level of the distal tips of the brush bristles. The barrier forces the RF field generated between the electrodes to be lifted over the top of the barrier, thus reaching the area where the bristles engage with the surfaces of the teeth and gums in use.

The distal tips of the brush bristles are rubbed against the surfaces of teeth in the usual manner to clean the teeth, while at the same time, the RF electrodes generate the RF field which provide a cleaning function at the same surface which is being brushed, at the level of the tips of the bristles.

Developments in the field of RF oral cleaning and/or treatment devices are generally sought.

### SUMMARY OF THE INVENTION

The invention is defined by the claims.

It has been found by the inventors through experimentation that the RF fields generated by the electrodes in the prior art have field strengths high enough to perform cleaning only in a very limited area. In particular, the highest RF field strengths are confined to the location of the electrode tips and the dielectric barrier tip.

Therefore high field strengths are only available at a small area at the tips of the electrodes, and in the center of the brush directly adjacent to the dielectric barrier. Thus the inventors have found that, in normal use, only a small area of the teeth surface is actually treated with the high RF field strength, which limits cleaning efficacy.

According to examples in accordance with an aspect of the invention, there is provided a cleaning and/or treatment unit for an oral cleaning and/or treatment device, the cleaning unit comprising:
a first protruding member, extending outward from a support surface of the cleaning and/or treatment unit, and comprising one or more first electrodes,
a second protruding member extending outward from the support surface of the cleaning and/or treatment unit, and comprising one or more second electrodes,
each of the first and second protruding members having a height dimension, extending between a proximal end of the member, connected to the support surface, and a distal end;
the first protruding member spaced from the second protruding member;
wherein at least one of the first and second protruding members is adapted to be flexible in a lateral dimension, perpendicular to the height dimension of the member, to permit at least a distal end portion of the protruding member to flex or oscillate laterally relative to a proximal end of the member.

Embodiments of the present invention are based on providing electrodes which are flexible which permits them to resiliently deflect, for example responsive to suitable mechanical interaction or forcing. This allows the RF intensity distribution of the RF fields generated by the electrodes to be spread across a wider area. This allows, over the course of a cleaning period, a high intensity RF energy field to be exposed across a far wider proportion of the dental surface areas, thereby enhancing the cleaning effect.

Furthermore, if the support surface to which the protruding members are coupled is oscillated, e.g. laterally, the flexibility means that the electrodes can be induced to describe an oscillatory, sweeping amplitude, allowing a larger area to be treated with the high intensity RF field.

Thus enhanced RF-based cleaning is achieved compared to prior art devices. In prior art devices, short stiff electrodes are used.

A further advantage of embodiments of the present invention is that the height of the electrodes can be extended to be positioned closer to the teeth (for example by extending the height of the protruding members), since the flexibility means that safety concerns surrounding rigid electrodes being close to the teeth are overcome. This closer proximity of the electrodes means that a higher RF field strength is applied at the tooth surface, enhancing cleaning effects. This removes the necessity for the dielectric barrier used in the prior art, since the RF fields are directly exposed at the tooth surface, without the need for the barrier to shape the RF field to reach the tooth surface.

The cleaning and/or treatment unit is a unit for an RF-energy based oral cleaning or treatment device. For example, each of the first and second electrodes may be suitable for being driven with an RF drive signal to generate an RF field. The device may be a device for performing cleaning using the RF field and/or for performing a treatment function in the oral cavity. Although RF frequency fields are preferred, other electromagnetic field frequencies can also be used, such as microwave.

Each of the first and second electrodes is therefore either a collector or emitter of electric charge.

The cleaning or treatment unit is for being received within the oral cavity of a user for performing an oral cleaning and/or treatment function. The cleaning unit may therefore be a cleaning and/or treatment unit. Reference in this disclosure to a cleaning unit may therefore be understood as reference to a cleaning and/or treatment unit for performing a cleaning and/or treatment function. For brevity reference may be made simply to a cleaning unit.

The cleaning and/or treatment unit may be for example a head for an oral cleaning and/or treatment device such as a toothbrush or other device, or may be a different form of cleaning or treatment unit, such a mouthpiece unit for fitting into the mouth.

The distal end of each protruding member may be adapted to flex or oscillate laterally relative to the proximal end responsive to application of a driving oscillation at a proximal end of the protruding member.

This therefore allows a sweeping or waving oscillation of the electrodes to be induced based on a driving force applied at the distal ends, coupled to the surface of the cleaning unit.

For example, a vibration can be applied at the support surface which causes oscillatory displacement of the proximal end of each protruding member. Due to the lateral flexibility of the protruding members, this induces a lateral oscillatory motion of the protruding members which causes the RF field to be spread over a wider area, and causes oscillatory variation in the position of the high intensity region(s) of the RF field.

The distal end of each protruding member may be adapted to flex or oscillate laterally relative to the proximal end responsive to lateral oscillation of the proximal end.

The distal end of each protruding member may be adapted to flex or oscillate laterally relative to the proximal end responsive to oscillation of the support surface.

In this disclosure, a lateral direction means a direction perpendicular or transverse the height dimension of the protruding member. This permits the member to be oscillated back and forth laterally for example, but also permits the member to for example be spun in a gyroscopic motion, i.e. with the distal end of the member deflected laterally relative to its proximal end, and spun rotationally about, relative to the proximal end.

In some examples, each protruding member may be adapted to have a greater flexibility in the lateral dimension than in the height dimension.

According to some embodiments, each protruding member may comprise a laminar member.

A plane of the laminar member may extend perpendicular said lateral dimension.

A laminar shape of the member enhances flexibility, since a flexural rigidity of the member is reduced in a direction perpendicular the laminar plane. This also helps to constrain or define the direction of lateral flexibility of the member, i.e. the dimension perpendicular the plane of the laminar member.

There are different options for the configuration or arrangement of the protruding members. The cleaning and/or treatment unit may comprise a single first and second protruding member, which may act as a pair of electrodes, e.g. an anode-cathode pair. An alternating driving signal may be applied across the pair of electrodes for example. In further examples, a plurality of first protruding members and a plurality of second protruding members may be provided, each first protruding member comprising at least one respective electrode, and each second protruding member comprising at least one respective electrode. Thus, a plurality of pairs of electrodes may be provided.

In some examples, the cleaning and/or treatment unit may comprise a plurality of first protruding members, arranged in a first spatial group or zone, and a plurality of second protruding members, arranged in a second spatial group or zone, the first group or zone arranged spaced from the second group or zone. The first and second groups may form anode and cathode areas for example, with an RF field generated between the protruding members (electrodes) of the first zone and the protruding members (electrodes) of the second zone. The spatial groups or zones may each be elongate or linear, for example, each may be formed by a respective row or line of protruding members. However, this is only one examples, and the groups or zones may have any regular or irregular shape in further examples.

To provide the flexibility, each of the protruding members may comprise a flexible material. In this example, each member is at least partially formed by a flexible material, the flexibility of the material providing the member the needed lateral flexibility to deflect or oscillate.

According to one set of embodiments, each of the protruding members may comprise one or more flexible conductive electrode elements, at least partially coated with a flexible polymer. This is advantageous since the conductive electrode core is insulated around its side faces by the polymer, enhancing safety and/or reducing the risk of short circuits with the other protruding member. The coated electrode may form the protruding member. In other words, the protruding member may consist of the at least one conductive electrode element at least partially coated with the flexible polymer.

According to an advantageous subset of embodiments, the one or more conductive electrode elements of each protruding member may include a distal portion which is exposed at a distal end of the protruding member. At least a further portion may be coated by the flexible polymer. This embodiment has the benefit that it limits the conductive area which is exposed, reducing risk of short-circuiting. It also constrains the area of electromagnetic emission to the very tip of the protruding member, which is the point closest to the surface of the teeth during use, thereby maximizing the field strength at the teeth surfaces. This therefore enhances the cleaning effect.

This also means that a dielectric barrier between the first and second protruding members can be omitted since the polymer coating around the sides means that the RF emission is already confined to an area distal of the protruding members.

For example, the conductive electrode element may terminate at a conductive distal tip element which is exposed at a distal tip of the protruding member.

For example, the conductive electrode element may comprise a conductive rounded tip element which is exposed at a distal end or terminal point of the protruding member. The rounded tip element is beneficial as it may avoid damage to gums or teeth when touched.

There are different options for the form of the oral cleaning and/or treatment unit, depending upon the intended application.

In one set of embodiments, the cleaning and/or treatment unit comprise a plurality of bristles for cleaning teeth, extending outward from the support surface of the cleaning unit. The cleaning unit may comprise a platen, which provides a support body, and wherein a face of the platen forms the support surface.

This set of embodiments may be suitable for example for cases where the cleaning unit is a head for a toothbrush device, for example adapted to couple to a body portion of the toothbrush device, e.g. removable coupling. However, other types of oral cleaning and/or treatment devices may also include bristles, such as mouthpiece units which fit into the mouth.

Each of the first and second protruding members may be surrounded by bristles in some examples.

In other words, the protruding members may be nested within an area of bristles. The bristles may be provided across a majority of the area of the support surface in some examples, and with the protruding members inset within the region covered by the bristles.

Preferably, the protruding members may extend to a distal height which is shorter than the distal height of the bristles.

Preferably the protruding members, or the electrodes within or carried by them, extend to a height which is within 20% to 40% of the height of the bristles. By making the protruding members have a height close to the height of the bristles, this means that the electrodes can be disposed in use close to the surfaces of the teeth, where the tips of the bristles engage the teeth. This increases the RF field intensity at the teeth surfaces, enhancing the cleaning effect.

As discussed, the protruding members can be induced to deflect or oscillate laterally responsive to application of a mechanical oscillation action at the proximal ends of the protruding members. Accordingly, examples in accordance with a further aspect of the invention may provide an oral cleaning and/or treatment device, comprising:
an oral cleaning and/or treatment unit in accordance with any example or embodiment outlined above or described below, or in accordance with any claim of this application; and
a mechanical oscillation mechanism arranged to oscillate the support surface of the cleaning and/or treatment unit at a first frequency, and wherein oscillation at said first frequency causes at least distal portions of the protruding members to oscillate laterally.

For example, the oscillation may be configured to cause at least distal tips of the protruding members to oscillate laterally. The tip means for example the terminal point of the protruding members.

The mechanical oscillation mechanism may be arranged to oscillate the support surface of the cleaning and/or treatment unit.

The mechanical oscillation mechanism may be arranged to induce a lateral oscillation of the cleaning and/or treatment unit support surface. The lateral oscillation may be linear lateral oscillation, or rotational oscillation.

The mechanical oscillation mechanism may be arranged to induce oscillation of the support surface in other directions, such as vertical oscillation (up and down), e.g. through tapping actuation action.

In an advantageous set of embodiments, at least distal portions of the first and second protruding members may exhibit a natural frequency of lateral oscillation relative to the proximal ends. For example, at least the terminal (distal-most) point of the protruding member may exhibit said natural frequency for example.

The first frequency of the mechanical oscillation mechanism may in at least one operation mode be set at a frequency which is resonant or harmonic with said natural frequency.

The effect of this is that the protruding members are caused to oscillate laterally at resonance, since the frequency of oscillation applied to the cleaning and/or treatment unit matches, or is harmonic with, the natural oscillation frequency of the members.

This means that the amplitude of oscillation of (e.g. the distal tips of) the protruding members is maximized and furthermore can be larger than the amplitude of the oscillation applied to the support surface of the cleaning and/or treatment unit.

In the at least first operation mode, the first frequency is set to be harmonic with the natural frequency of lateral oscillation of the protruding members. A natural frequency means a resonant frequency of (lateral) oscillation of the protruding members. By 'harmonic with' is meant that the first frequency matches the natural frequency, or is set at a frequency which is one of the harmonics of the natural frequency. Another way of saying this is that the first frequency is set so as to be resonant with the natural frequency. Another way again of saying this is that the first frequency is set so as to induce resonant oscillation of the protruding member, i.e. so that the protruding member is at resonance.

According to one or more embodiments, in at least a further operation mode, said first frequency of the mechanical oscillation mechanism may be set at a frequency which is non-resonant with the natural frequency, for example anti-resonant or anti-harmonic with the natural frequency.

Anti-resonant means for example anti-harmonic. This means for example it is set at a frequency which is between two successive harmonics of the natural frequency.

This means in the further operation mode, the oscillation of the support surface may be anti-resonant with the natural frequency of the protruding members, meaning that movement of distal portions of the protruding members is minimized. For example, the distal ends of the protruding members may ideally be left substantially stationary (substantially zero amplitude and zero frequency of oscillation).

In some examples, the first and second protruding members may each exhibit the same natural frequency of oscillation relative to the support surface. In further examples, the first and second protruding members may each exhibit different respective natural frequencies of oscillation relative to the support surface.

In some examples, each of the first and second protruding members may exhibit a set or range of natural frequencies of oscillation relative to the support surface. This may be the same set or range of frequencies for each protruding member, or the sets or ranges of natural frequencies may be different. The sets or ranges of natural frequencies may partially overlap in some examples. These various options enable different RF energy spatial distributions to be achieved when driving oscillation is applied to the protruding members for example.

The cleaning and/or treatment unit of the cleaning and/or treatment device may, as discussed above, comprise a plurality of bristles for cleaning teeth, extending outward from a surface of the cleaning unit, and wherein said oscillation of the cleaning unit by the mechanical oscillation mechanism is arranged to cause oscillation of the bristles.

In other words, the oscillation that drives the bristle vibration may also drive the movement or oscillation of the protruding members.

The bristles and the protruding members are preferably coupled to the same surface and thus the same oscillation action is able to drive oscillations of both.

The oral cleaning and/or treatment device may further comprise an RF generator arranged to supply an alternating drive signal to the first and second electrodes, to induce an RF alternating field in an area around and between the electrodes, to provide an oral cleaning function when the head is received in an oral cavity.

The RF generator may supply alternating potential between the first and second electrodes, such that they are driven for example with alternating and mutually reciprocal polarities.

The oral cleaning and/or treatment device may further comprise a body portion which houses the RF generator and the mechanical oscillation mechanism, the body portion being mechanically and electrically coupled to the cleaning and/or treatment unit.

Optionally, it may be releasably coupleable, so that the cleaning and/or treatment unit is detachable from the body portion.

The cleaning and/or treatment unit may for example be a head for an oral cleaning device. For example the cleaning device may be a toothbrush device and wherein the cleaning unit is a toothbrush head.

However, other types of oral cleaning and/or treatment device may alternatively be provided, such as mouthpiece devices which may not include a coupled handle or body portion.

Examples in accordance with a further aspect of the invention may provide a method of manufacturing an oral cleaning and/or treatment unit, the method comprising:
providing a support body, having a support surface;
providing a first protruding member, extending outward from the support surface of the support body, and comprising one or more first electrodes
providing a second protruding member extending outward from the support surface of the support body, and comprising one or more second electrodes,
each of the first and second protruding members having a height dimension, extending between a proximal end of the member, connected to the support surface, and a distal end;
wherein at least one (for example each) of the first and second protruding members is adapted to be flexible in a lateral dimension, perpendicular the height dimension of the member, to permit at least a distal end portion of the protruding member to flex or oscillate laterally relative to a proximal end of the member.

In manufacturing the cleaning and/or treatment unit, providing the first protruding member and/or providing the second protruding member may comprise:
configuring or selecting one or more of: a height of each protruding member, a material composition of each protruding member, a shape of each protruding member, and/or a mass distribution of each protruding member,
for thereby tuning a natural frequency of lateral oscillation of at least a distal portion of the protruding member about the proximal end of the protruding member, based on a pre-determined target natural frequency.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a prior art RF toothbrush device;
Fig. 2 shows an RF field distribution generated by the prior art RF toothbrush;
Fig. 3 shows an example oral cleaning and/or treatment unit according to one or more embodiments;
Fig. 4 shows a simulated RF field distribution generated by an example cleaning and/or treatment unit according to one or more embodiments of the invention;
Figs 5-6 show an example oral cleaning and/or treatment unit according to one or more embodiments;
Fig. 7-8 show a further example oral cleaning and/or treatment unit according to one or more embodiments, comprising a plurality of pairs of protruding members;
Fig. 9 illustrates an example construction for the protruding members;
Figs. 10-12 show example oral cleaning and/or treatment units comprising bristles;
Fig. 13 shows components of an example oral cleaning and/or treatment device comprising a mechanical oscillation mechanism;
Fig. 14 shows connection of an example RF generator to electrodes of an example oral cleaning and/or treatment device; and
Fig. 15 shows a perspective view of an example toothbrush device incorporating a cleaning and/or treatment unit according to one or more embodiments.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an oral cleaning and/or treatment unit, e.g. a head for an oral cleaning and/or treatment device, which includes electrodes for generating an RF field for providing an oral cleaning function. The unit includes at least a first and second protruding member, which protrude in a same general direction away from a base or support structure. Each comprises one or more electrodes for generating an RF field. The protruding members are adapted to have a flexibility that permits the member to resiliently bend or deform in a direction perpendicular the direction of extension of the member out of the support surface (in a 'lateral direction').

By for example applying a sufficiently high amplitude vibration or oscillation at the support surface, the flexibility means that the protruding members will be induced to sway laterally in an oscillatory manner responsive to the shaking of their distal ends by the lateral oscillation of the support surface. This movement of the protruding members induces oscillatory movement of the RF electrodes and consequently an oscillatory movement of the RF field intensity patterns they generate. The result is that high regions of RF intensity are swept periodically back and forth, resulting in a wider area of the teeth or gums being engaged by the RF fields, and thus benefitting from the cleaning effect.

It has been found that RF fields generated by the electrodes in prior art devices have field strengths high enough to perform cleaning only in a very limited area. In particular, the highest RF field strengths are confined to the location of the electrode tips and the dielectric barrier tip.

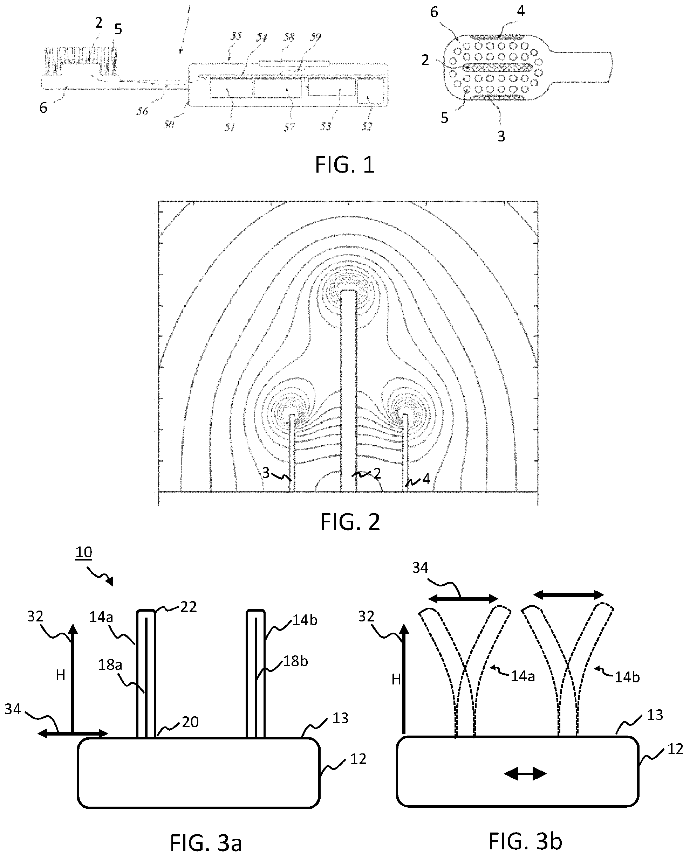

This is shown in Fig. 2 which shows a simulation of the RF field of the prior art toothbrush of US 10201701B2. The high strength RF field is confined to only a small area around the central region of the brush head.

Therefore high field strengths are only available at a small area at the tips of the electrodes 3, 4, and in the center of the brush directly adjacent to the dielectric barrier 2. This limits cleaning efficacy.

The electrodes 3, 4 in the prior art are rigid. As discussed, embodiments of the present invention are based on providing electrodes in a flexible configuration, to allow high-strength RF field areas to be swept over a wider area over time, thus spreading the application of the RF energy for cleaning and/or treatment.

Fig. 3 schematically depicts a simple first example of a cleaning and/or treatment unit for an oral cleaning and/or treatment device in accordance with embodiments of the present invention.

The cleaning unit is for being received within the oral cavity of a user for performing an oral cleaning and/or treatment function. The cleaning unit may therefore be a cleaning and/or treatment unit. Reference in this disclosure to a cleaning unit may therefore be understood as reference to a cleaning and/or treatment unit for performing a cleaning and/or treatment function. For brevity reference will be made herein simply to a cleaning unit.

The cleaning unit 10 comprises a first protruding member 14a, extending outward from a support surface 13 of the cleaning unit, and comprising one or more first electrodes 18a. In the example of Fig. 3, the cleaning unit comprises a support body 12 such as a platen, the support body having an upper face which provides a support surface 13 from which the protruding members extend.

The electrode 18a of the first protruding member is in this case integrated within the body of the protruding member. For example, the protruding member in this case may comprise a laminar protruding member having an electrode integrated therein. In other examples, the electrode may be exposed at a surface of the protruding structure or the protruding structure itself may be formed from a conductive material to act as an electrode.

The cleaning unit further comprises a second protruding member 14b extending outward from the support surface 13 of the cleaning unit, and comprising one or more second electrodes 18b. The first protruding member 14a is spaced from the second protruding member 14b.

Each of the electrodes 18a, 18b comprises a conductive element which may take a variety of shapes or forms, for instance planar form (e.g. a flat plate), or in the form of a linear wire, or in the form of a wire loop.

Each of the first and second protruding members 14a, 14b has a height dimension, H (indicated by arrow 32), extending between a proximal end 20 of the member, connected to the support surface 13, and a distal end 22. In other words, the height dimension is defined by an axis running through the protruding member from its proximal end to its distal end.

Each of the first 14a and second 14b protruding members is adapted to be flexible in a dimension perpendicular the height dimension of the member (in a lateral direction), to permit at least a distal end portion of the protruding member to flex or oscillate laterally relative to a proximal end 20 of the member. The lateral dimension is indicated in Fig. 3a and Fig. 3b by arrow 34.

In other words, the protruding member is resilient laterally to allow it to bend or flex cross-wise or transverse to its direction of extension out of the support surface 13.

This is illustrated in Fig. 3b which schematically depicts lateral flexing of the first 14a and second 14b protruding members in either lateral direction 34. As shown, when each member is bent or flexed, at least a distal portion of it, extending from a distal end 22 some way down the height of the member, is deflected in the lateral direction relative to its neutral central position when no deflection force is or has been applied to it.

Due to the flexibility, the distal end of each protruding member may be adapted to flex or oscillate laterally relative to the proximal end responsive to application of a driving oscillation at a proximal end of the protruding member.

This therefore allows a sweeping or waving oscillation of the electrodes to be induced based on a driving force applied at the distal ends, coupled to the surface of the cleaning unit.

For example, lateral oscillation of the protruding members 14a, 14b may be induced by oscillating the support surface 13 to which the protruding members 14a, 14b are coupled. For example a vibration can be applied at the support surface which causes oscillatory displacement of the proximal end of each protruding member. The flexibility of the members means that, in response to this, the electrodes 18a, 18b can be induced to deflect in an oscillatory manner back and forth, with their distal tips 22 describing a large sweeping amplitude. This allows the peak intensity regions of the RF fields to be swept over a wider area of the teeth, enhancing cleaning.

The distal end 22 of each protruding member 14 may be adapted to flex or oscillate laterally relative to the proximal end 20 responsive to lateral oscillation of the proximal end.

The distal end 22 of each protruding member 14 may be adapted to flex or oscillate laterally relative to the proximal end 20 responsive to oscillation of the support surface 13.

In some examples, each protruding member 14 may be adapted to have a greater flexibility in the lateral dimension 34 than in the height dimension 32.

In advantageous examples, each protruding member may be flexible so as to permit a distal tip of the member to resiliently deflect laterally to at least ±5 ° relative to the proximal end of the member. Each protruding member may, by way of non-limiting example, have a maximum angle of lateral deflection for example anywhere from ± 5° to ± 45 °, for example between ±30° and ±40°.

Optionally, the cleaning unit 10 may further comprise a dielectric barrier member positioned between the first 14a and second 14b protruding members, however this is not essential for reasons already discussed above.

As discussed above, by providing electrodes comprised by protruding members which are flexible in at least a lateral direction, in use, this allows RF field energy generated by the electrodes to be distributed or spread over a wider spatial treatment area (compared to rigid electrodes). This allows a wider area of, for example, a tooth or other oral surface to receive RF energy treatment or cleaning. This enhances the cleaning or treatment effect.

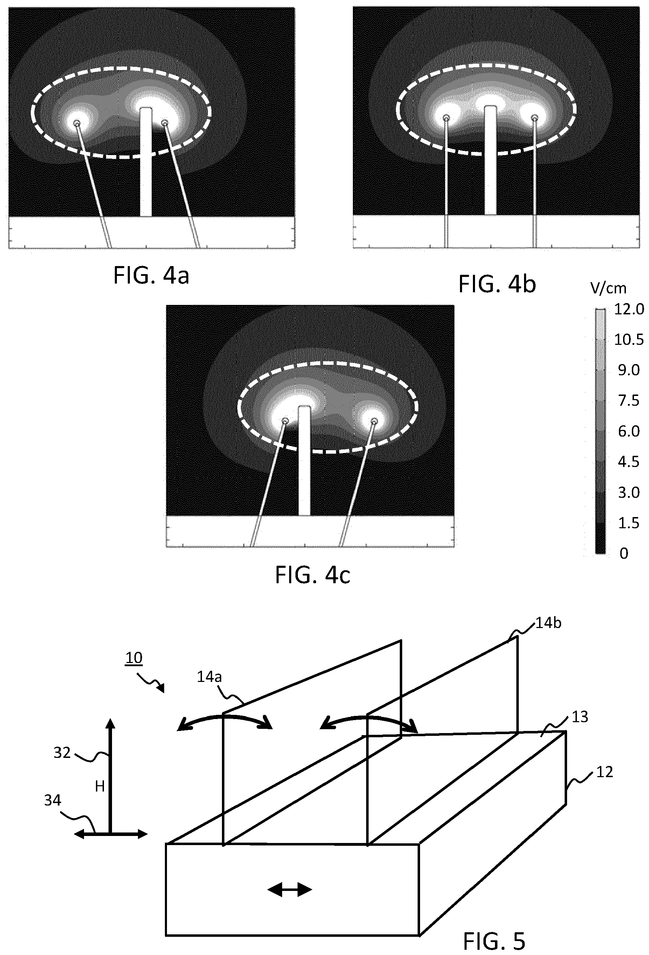

The improvement can be seen in RF field simulation results generated for one example embodiment of the invention, and shown in Fig. 4. Fig 4 shows the electric field distribution for an example cleaning unit comprising a first and second protruding member, each comprising an electrode, and with a (optional) dielectric barrier element or tuft element (set of bristles) positioned between the protruding members. The protruding members are laterally flexible. A scale is also shown in Fig. 4 which indicates the electric field strength (units: V/cm) corresponding to each shading gradation.

Fig. 4 shows the cleaning unit in use, wherein the protruding members are oscillating laterally. Fig. 4a shows the electrodes deflected leftward, Fig. 4b shows the electrodes at a neural central position, and Fig. 4c shows the electrodes deflected rightwards. It can be seen that at each point in the oscillation cycle, the effective active treatment region of the field (indicated by dashed circles) is significantly larger and wider than in the case of the prior art (see Fig. 2). The time-average RF field intensity (over an oscillation cycle) is thus more spatially distributed, allowing for RF energy application over a wider area.

It is noted that although Fig. 4 shows oscillatory motion of the protruding members in which the first 14a and second 14b members oscillate in phase, so that they follow the same movement pattern, in other examples, they may be controlled to move out of phase, for example in anti-phase with one another. This will be explained in further descriptions to follow.

The cleaning unit 10 is a cleaning unit for use with an RF-energy based oral cleaning or treatment device. For example, the first 18a and second 18b electrodes may be suitable for being driven with an RF drive signal to generate an RF field. The cleaning unit is for being received within the oral cavity of a user.

Each of the first 18a and second 18b electrodes may therefore be either a collector or emitter of electric charge.

In particular, the electrodes 18a, 18b are for driving with an RF drive signal to generate an RF field within a space proximal and between the electrodes for performing an oral cleaning function when the oral cleaning unit 10 is received in an oral cavity of a user.

Each of the first and second electrodes 18a, 18b may be connected to a respective electrical input connector or terminal (not shown) for receiving an RF driving signal.

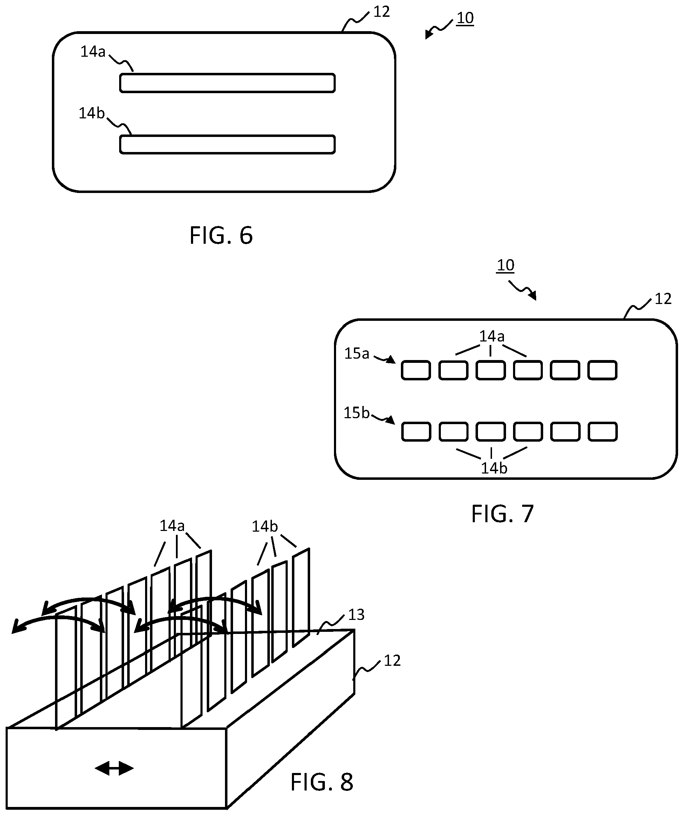

According to some embodiments, each protruding member 14a, 14b may be in the form of a laminar member. An example is illustrated in Figs. 5 and 6. Fig. 5 shows the cleaning unit 10 in perspective view, and Fig. 6 shows a plan view of the cleaning unit 10.

As shown, the laminar protruding members 14a, 14b, each extend from a line on the support surface 13, and thus define an elongate, linear footprint on the support surface. In this example, the two protruding members are arranged facing one another. A major planar surface of the first protruding member 14a is facing a major planar surface of the second protruding member 14b. The planes defined by the two protruding members in this example are arranged parallel one another, but this is not essential.

A plane of each laminar protruding member 14a, 14b in this example extends perpendicular the lateral dimension 34, so that each protruding member is adapted to be flexible in a direction perpendicular to the plane which it defined. The direction of deflection of the protruding members is illustrated by arcuate arrows in Fig. 5.

A laminar shape of the protruding member 14 enhances flexibility, since a flexural rigidity of the member is reduced in a direction perpendicular the laminar plane. This also helps to constrain or define the direction of lateral flexibility of the member, i.e. the dimension perpendicular the plane of the laminar member.

There are different options for the configuration or arrangement of the protruding members 14a, 14b.

The example cleaning units 10 of Fig. 3 and Figs. 5-6 are each shown as comprising a single first and second protruding member, which may act or be operated as a pair of electrodes. An alternating RF driving signal may be applied between the pair of electrodes for example, to thereby generate an alternating (AC) electromagnetic field.

However, in further examples, a plurality of first protruding members and a plurality of second protruding members may be provided, each first protruding member comprising a respective electrode, and each second protruding member comprising a respective electrode. Thus a plurality of pairs of electrodes may be provided.

An example is shown in Figs. 7-8. Fig. 7 shows a plan view of the cleaning unit. Fig. 8 shows a perspective view.

Here, the cleaning unit 10 comprises a plurality of first protruding members 14a, arranged in a first spatial groups, and a plurality of second protruding members 14b, arranged in a second spatial group, the first group arranged spaced from the second group.

In particular, the plurality of first protruding members 14a, is arranged in a linear formation, in particular in a first row, and the plurality of second protruding members 14b, is arranged in a second linear second formation, in particular a second row, the first row arranged spaced from and facing the second row.

In other words, the cleaning unit 10 comprises a first linear array 15a of said first protruding members, and a second linear 15b array of said second protruding members, the first array facing and spaced from the second array.

Breaking the protruding members 14 up into multiple smaller protruding members can help to tune the desired oscillation characteristics for the members. Smaller members may exhibit for example a smaller amplitude of deflection due to their smaller mass. They may have a different natural frequency of lateral oscillation, which may be useful for tuning a resonant frequency of oscillation of the electrodes. This will be discussed in greater detail later.

Although rows of protruding members are shown by way of example in Figs. 7-8, in other examples, the first and second protruding members may be formed in any other shape of spatial group of formation, including regular or irregular patterns. The first and second groups may form anode and cathode areas for example, with an RF field generated between the protruding members (electrodes) of the first zone and the protruding members (electrodes) of the second zone.

There are different options for the material construction of the protruding members 14.

To enable the flexibility, each of the protruding members 14a, 14b may comprise a flexible material. In this example, each member is at least partially formed by a flexible material, the flexibility of the material providing the member the needed lateral flexibility to deflect or oscillate.

Each member may for example consist entirely of a flexible material or only a portion may be formed of a flexible material.

In other examples, the flexibility may be achieved in a different way, for example with a flexible pivot or junction member provided connected between the proximal end of the protruding member and the support surface.

According to one set of embodiments, each of the protruding members may comprise one or more conductive electrode elements, at least partially coated with a flexible polymer. This is advantageous since the conductive electrode core is insulated around its side faces by the polymer, enhancing safety and/or reducing the risk of short circuits with the other protruding member.

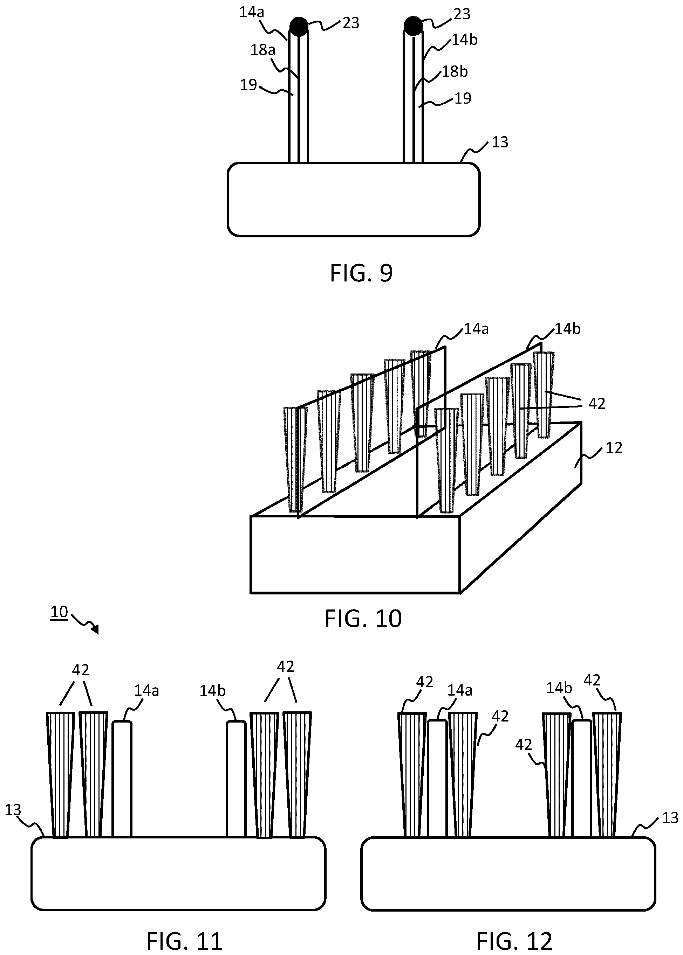

An example of such an embodiment is illustrated in Fig. 9. The first 14a and second 14b protruding members each comprise an inner conductive electrode element 18a, 18b which is coated around its sides by a flexible polymer coating 19.

In this example, the one or more conductive electrode elements 18 of each protruding member 14 include a distal portion 23 which is exposed at a distal end of the protruding member. The remaining portion of the electrode element is coated by the flexible polymer.

In the particular example of Fig. 9, the conductive electrode element 18 comprises a conductive rounded tip element 23 which is exposed at a distal end or terminal point of the protruding member 14. The rounded tip element is beneficial as it may avoid damage to gums or teeth when touched.

In alternative examples however, the protruding member 14 may comprise a flexible polymer core, coated with a conductive outer layer to provide the electrode. Other examples include laminar protruding members formed of laminates of metal and polymer.

In further examples, the protruding member 14 may be formed of a conductive polymer material. Such materials typically have greater elastic properties compared to metal, thus allowing them to provide both the conductive properties, for the RF energy transmission, and also the required elastic properties. This would simplify manufacturing since each member could be formed form a single material only, instead of two materials.

However, a further alternative also includes the protruding member 14 being formed of a laminar metal element, the flat, laminar shape providing the necessary lateral flexibility, and the metal material providing the required conductive properties. Any suitable conductive metal could be used. A preferred example may be stainless steel.

There are different options for the form of the oral cleaning or treatment unit 10, depending upon the intended application.

In one set of embodiments, the cleaning unit 10 may comprise a plurality of bristles or other protruding cleaning elements for cleaning teeth by rubbing against the teeth, extending outward from the support surface 13 of the cleaning unit. The cleaning unit may comprise a platen 12, which provides a support body, and wherein a face of the platen forms the support surface 13.

This set of embodiments may be suitable for example for cases where the cleaning unit 10 is a head for a toothbrush device, for example adapted to couple to a body portion of the toothbrush device, e.g. for removable coupling. However, other types of oral cleaning devices may also include bristles, such as mouthpiece units which fit into the mouth.

Fig. 10 schematically illustrates one example oral cleaning unit according to an embodiment which comprises bristles 42.

The bristles 42 in this example are arranged in bundles or tufts, with the bundles aligned in a row. In this example, the bundles of bristles are arranged in a row adjacent each of the protruding members 14a, 14b, on one lateral side of each of the protruding members.

Although Fig. 10 shows only one row of bristles 42 on each side of the protruding members 14a, 14b, this is for illustration only, and multiple rows can be provided in further examples, as illustrated in Fig. 11 for example. It is also not essential for the bristles bundles to be arranged in rows, but may instead be distributed in a different pattern. It is also not essential for the bristles to be provided in bundles.

In preferred examples, the bristles are provided on both lateral sides of the protruding members 14 so that the first and second protruding members 14a, 14b are surrounded by bristles.

An example is shown in Fig. 12.

Here, each of the first and second protruding members is surrounded (on both lateral sides) by bristles 42.

In other words, the protruding members 14a, 14b are nestled within an area of bristles 42. The bristles may be provided across a majority of the area of the support surface 13 in some examples, and with the protruding members inset between bundles of bristles within the region covered by the bristles.

Preferably, and as shown in Figs. 11 and 12, the protruding members 14a, 14b may each extend to a distal height which is shorter than the distal height of the bristles 42.

Preferably the protruding members 14a, 14b each have a height which is within 20% to 40% of the height of the bristles 42. By making the protruding members have a height close to the height of the bristles, this means that the electrodes can be disposed in use close to the surfaces of the teeth, where the tips of the bristles engage the teeth. This increases the RF field intensity at the teeth surfaces, enhancing the cleaning effect.

As discussed, the protruding members 14a, 14b can be induced to deflect or oscillate laterally responsive to application of a mechanical oscillation action at the proximal ends 20 of the protruding members.

Accordingly, examples, in accordance with a further aspect of the invention may provide an oral cleaning and/or treatment device which includes an actuation mechanism for oscillating the support surface 13 of the support body 12.

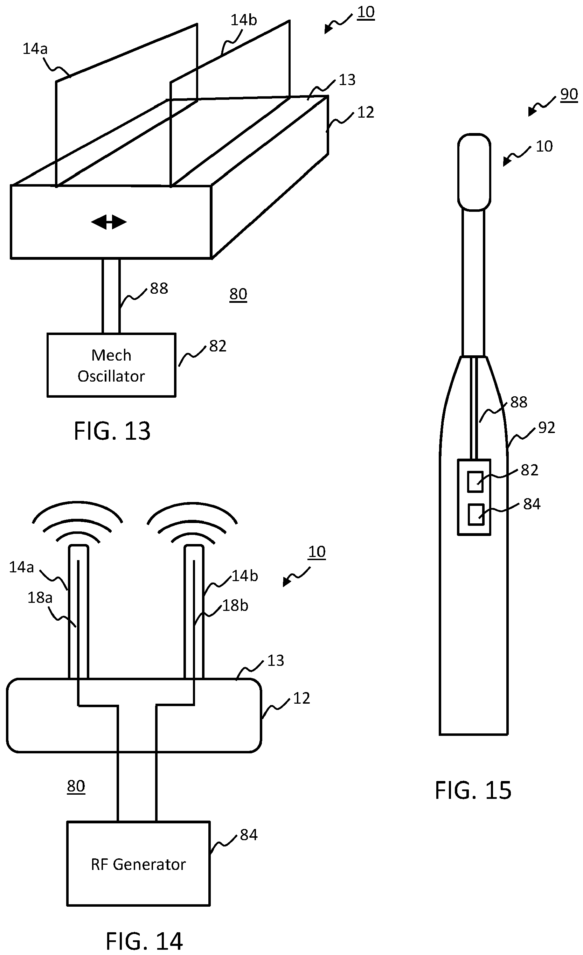

Fig. 13 schematically outlines the components of such an oral cleaning and/or treatment device 80.

The device 80 comprises an oral cleaning and/or treatment unit 12 in accordance with any example or embodiment outlined above or described below, or in accordance with any claim of this application.

The device further comprises a mechanical oscillation mechanism 82 arranged to oscillate the support surface 13 of the cleaning unit at a first frequency, and wherein oscillation at said first frequency causes at least distal portions of the protruding members to oscillate, e.g. laterally.

For example, the oscillation may be configured to cause at least distal tips of the protruding members 14 to oscillate laterally. Tip means the terminal point of the protruding member.

The oscillation mechanism 82 may be arranged to apply an oscillation to the support body 12 (e.g. platen) which thereby causes oscillation of the support surface 13.

The oscillation mechanism 82 may include a motor or actuator for generating an oscillatory motion, and a mechanical coupling element 88, e.g. a drive shaft or other mechanical connector, arranged to mechanically couple the oscillatory motion to the cleaning unit 10.

The oscillation mechanism 82 may further comprise a controller (not shown) adapted to control a frequency of oscillation of the cleaning unit 10 by the motor of the oscillation mechanism.

The cleaning unit 10 may comprise a mechanical coupling portion (not shown), e.g. a coupling slot or groove, shaped to receive the coupling element 88 (e.g. drive shaft) of the oscillation mechanism 82, and arranged to couple the oscillations of the oscillation mechanism to the support surface 13.

The mechanical oscillation mechanism 82 may thus be arranged to oscillate the support surface 13 of the cleaning unit.

The mechanical oscillation mechanism 82 may in particular be arranged to induce a lateral oscillation of the cleaning unit support surface 13. The lateral oscillation may be a linear oscillation (e.g. from side-to-side), or may be a rotational oscillation in some examples.

The mechanical oscillation mechanism may in further examples be arranged to induce an oscillation in a different direction, e.g. a vertical oscillation (up and down), e.g. by applying a tapping motion to the support body 12.

According to one or more embodiments, the first frequency of the oscillation mechanism 82 may be anywhere in the range of 50 Hz to 500 Hz. The frequency of oscillation may be adjustable. The oscillation mechanism may thus be operable to provide an oscillation of the support surface anywhere within an operating range of frequencies for example.

In an advantageous set of embodiments, the first 14a and second 14b protruding members may be adapted such that said at least distal portions of the members exhibit a natural frequency of lateral oscillation relative to the proximal ends 20, and wherein, in at least one operation mode, said first frequency of the mechanical oscillation mechanism 82 is set at a frequency which is harmonic or resonant with said natural frequency.

The effect of this is that the protruding members 14a, 14b are caused to oscillate laterally at resonance, since the frequency of oscillation applied to the cleaning unit matches or is harmonic with the natural oscillation frequency of the members.

This means that the amplitude of oscillation of (e.g. the distal tips 22 of) the protruding members 14 is maximized and furthermore can be larger than the amplitude of the oscillation applied to the support surface 13 of the cleaning unit.

At least the terminal (distal-most) point 22 of the protruding member 14 exhibits said natural frequency for example.

The first frequency of the mechanical oscillator 82 is set at a frequency which is harmonic with the natural frequency of lateral oscillation of the protruding members 14a, 14b about their proximal points 20. This natural frequency means a resonant frequency of (lateral) oscillation of the protruding members. By 'harmonic with' is meant that the first frequency matches the natural frequency, or is set at a frequency which is one of the harmonics of the natural frequency. Another way of saying this is that the first frequency is set so as to be resonant with the natural frequency. In other words, the first frequency is set so as to induce resonant oscillation of the protruding member, i.e. so that the protruding member is at resonance.

This means the mechanical resonance frequency of the protruding elements 14 is resonant with the vibration being applied to the cleaning unit 10 by the oscillation mechanism 82.

In accordance with one or more advantageous embodiments, in at least a further operation mode, said first frequency of the mechanical oscillation mechanism may be set at a frequency which is non-resonant with the natural frequency, preferably anti-resonant or anti-harmonic with the natural frequency.

Anti-resonant means for example anti-harmonic. This means for example it is set at a frequency which is between two successive harmonics of the natural frequency.

This means in the further operation mode, the oscillation frequency of the support surface is an anti-resonant frequency of the protruding members, meaning that movement of distal portions of the protruding members relative to the support surface is minimized. For example, the distal ends of the protruding members may ideally be left substantially stationary (substantially zero amplitude and zero frequency of oscillation) relative to the support surface, while the support surface 13 is still moving (oscillating). Thus, bristles or other cleaning elements carried by the support surface can continue to move, while the electrode tips are maintained substantially stationary.

The anti-resonant operation mode is beneficial for cases where it is desired to deliver a local high intensity RF treatment while still oscillating the bristles or other cleaning elements. By maintaining the distal ends of the members substantially stationary, a high intensity RF field region around the distal tip is held substantially spatially static, allowing higher intensity RF energy to be delivered to an oral area proximal the distal tip.

When driven in anti-resonance mode, proximal portions of the protruding members may still move laterally relative to the support surface, but distal tips may have a much smaller (or substantially zero) net lateral motion relative to the support surface.

A controller may be provided, operatively coupled to the oscillation mechanism 82, and adapted to control the operation mode. The controller may be operable to change the mode between at least the resonance operating mode and the non-resonant (or anti-resonance) further operating mode. Other operating modes may also be provided.

The resonance frequency (natural frequency) of each protruding member 14a, 14b depends upon the material properties of the protruding member, as well its dimensions (height, width, thickness). The natural frequency of lateral oscillation of each member 14 can than thus be tuned based on adjusting these parameters in manufacture.

To increase a natural amplitude of oscillation, the distal tips 22 of the protruding members 14a, 14b may be designed to have a greater mass density than a remaining portion of the member, so that the member is weighted toward its tip (the center of mass is closer to the distal end 22 of the member than to the proximal end 20).

The natural oscillation frequency of the protruding members 14 is also determined by their width. Thus a higher natural frequency might be achieved by providing a plurality of shorter-width protruding members, for example as shown in the example of Figs. 7-8 described above.

In some examples, the cleaning or treatment unit 10 may comprise a plurality of protruding members, and wherein different subsets of the protruding members may exhibit different natural frequencies of oscillation relative to the support surface. This may facilitate for example non-homogeneous oscillation patterns of different subsets of the protruding members for a given driving oscillation frequency of the support surface.

For example, at least the first protruding member 14a may have a first natural frequency, and at least the second member 14b a second natural frequency. This can enable non-uniform oscillation of the first and second protruding members, thereby modifying the spatial distribution of RF energy.

Each of the first and second protruding members may exhibit a set or range of natural frequencies. The sets or ranges of the two members may partially overlap. This may allow, in at least one control mode, selectively controlling only one of the two protruding members to oscillate at resonance, while the other is not at resonance, or is at anti-resonance, or controlling both to oscillate at resonance simultaneously. In the latter case, this may cause the two to oscillate in phase with one another, following the same oscillation pattern. In the former case, this may cause the two to oscillate not in phase with one another, or even in anti-phase with one another by appropriately configuring the natural frequencies, and the driving oscillation.

The cleaning unit 10 of the cleaning device 80 may, as discussed above, comprise a plurality of bristles 42 for cleaning teeth, extending outward from a surface of the cleaning unit, and wherein said oscillation of the cleaning unit by the mechanical oscillation mechanism is arranged to cause oscillation of the bristles.

In other words, the oscillation that drives the bristle vibration also drives the movement or oscillation of the protruding members 14.

The bristles 42 and the protruding members 14 are preferably coupled to the same support surface 13 and thus the same oscillation action is able to drive oscillations of both.

The oral cleaning device 10 may further comprise an RF signal generator electrically coupled to the electrodes 18a, 18b of the protruding members 14a, 14b. The electrical connections between the RF generator and the cleaning unit 10 electrodes are schematically illustrated in Fig. 14.

The RF generator 84 is arranged to supply an alternating drive signal to the first 18a and second 18b electrodes, to induce an RF field in an area around and between the electrodes, to provide an oral cleaning function when the oral cleaning unit 10 is received in an oral cavity.

The RF generator may supply an alternating potential or current between the first 18a and second 18b electrodes, such that they are driven for example with alternating and mutually reciprocal polarities.

Where multiple pairs of first and second electrodes are provided, as discussed above, an alternating drive signal may be supplied across each pair of electrodes.

This alternating drive signal drives generation of an alternating (AC) electromagnetic field between the electrodes, at an RF frequency.

By way of example, a frequency of the alternating RF field (and alternating drive signal) may be a frequency in the range 3 KHz to 300 GHz for example.

The total output power of the generated field may according to advantageous embodiments, be within a range of 0.1W to 15W, for example 0.1W to 10W. This range is safe for use in a mouth of a user and is sufficient for providing cleaning and/or treatment effects discussed above.

As discussed above, the RF energy interacts with surfaces of teeth and gums to provide a cleaning and/or treatment function.

The device may further include a controller or processor for controlling the RF generator 84. User control means may be provided, e.g. buttons, to allow a user to toggle the RF cleaning and/or treatment on and off.

The oral cleaning device 80 may further comprise a handle, and/or a body portion 92, which may be directly or indirectly coupled to the cleaning unit 10. The handle or body portion may house or accommodate the RF generator 82, and/or the mechanical oscillator 82. A controller may further be included operatively coupled to the RF generator and the mechanical oscillator, to control operation of these components.

The cleaning unit 10 may be arranged to be releasably coupleable to the body portion 92, so that the cleaning unit is detachable from the body portion. It may be mechanically and electrically coupleable with the body portion. The electrical connection may permit connection of the drive signals from the RF generator to the electrodes 18 of the plurality of protruding members. The mechanical connection may couple the mechanical motion of the oscillator mechanism to the support body 12.

The oral cleaning and/or treatment device according to some embodiments may be a toothbrush 90, wherein the cleaning unit 10 is a brush head for the toothbrush. One example is shown schematically in Fig. 15, which shows the oral cleaning unit 10 in the form of a toothbrush head mounted to the distal end of a body portion 92 which houses the RF generator 84 and the mechanical oscillation mechanism 82. The body portion 92 is electrically and mechanically coupled to the cleaning unit portion. Fig. 15 schematically shows the mechanical connector element 88 (e.g. drive shaft) which mechanically couples the oscillator mechanism with the cleaning unit support surface 13. The body portion forms a handle for the device. An electrical connection is also provided between the head and the body portion.

Other types of oral cleaning and/or treatment device may alternatively be provided, such as mouthpiece devices which may not include a coupled handle or body portion.

By way of non-limiting example, the oral cleaning and/or treatment device according to embodiments of the present invention may be any of the following:
- a toothbrush device (e.g. powered toothbrush);
- an oral irrigator device;
- a flossing device;
- a combined brushing and flossing device; or
- a mouthpiece device, e.g. brushing mouthpiece device.

Examples in accordance with a further aspect of the invention may provide a method of manufacturing an oral cleaning unit, the method comprising:
providing a support body, having a support surface;
providing a first protruding member, extending outward from the support surface of the support body, and comprising one or more first electrodes
providing a second protruding member extending outward from the support surface of the support body, and comprising one or more second electrodes,
each of the first and second protruding members having a height dimension, extending between a proximal end of the member, connected to the support surface, and a distal end;
wherein each of the first and second protruding members is adapted to be flexible in a lateral dimension, perpendicular the height dimension of the member, to permit at least a distal end portion of the protruding member to flex or oscillate laterally relative to a proximal end of the member.

In manufacturing the cleaning unit, providing the first protruding member and providing the second protruding member may comprise:
configuring or selecting one or more of: a height of each protruding member, a material composition of each protruding member, a shape of each protruding member, and/or a mass distribution of each protruding member,
for thereby tuning a natural frequency of lateral oscillation of at least a distal portion of the protruding member about the proximal end of the protruding member, based on a pre-determined target natural frequency.

The material composition may include a flexibility or elasticity of each protruding member.

Configuring a mass distribution may comprise providing a weighted distal tip element to the protruding member, e.g. a conductive tip element such as the tip element 23 of Fig. 9.

As discussed above, certain embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A cleaning and/or treatment unit (10) for an oral cleaning and/or treatment device, the cleaning and/or treatment unit comprising:
a first protruding member (14a), extending outward from a support surface (13) of the cleaning and/or treatment unit, and comprising one or more first electrodes (18a),
a second protruding member (14b) extending outward from the support surface of the cleaning and/or treatment unit, and comprising one or more second electrodes (18b),
each of the first and second protruding members having a height dimension (H), extending between a proximal end (20) of the member, connected to the support surface, and a distal end (22);
the first protruding member spaced from the second protruding member;
wherein at least one of the first and second protruding members is adapted to be flexible in a lateral dimension (34), the lateral dimension being perpendicular the height dimension of the member, to permit at least a distal end portion of the protruding member to flex or oscillate laterally relative to a proximal end of the member.

2. A cleaning and/or treatment unit (10) as claimed in claim 1, wherein the distal end (22) of each protruding member (14a, 14b) is adapted to flex or oscillate laterally relative to the proximal end (20) responsive to application of a driving oscillation at a proximal end of the protruding member.

3. A cleaning and/or treatment unit (10) as claimed in claim 1 or 2, wherein each protruding member (14a, 14b) comprises a laminar member.

4. A cleaning and/or treatment unit (10) as claimed in any of claims 1-3, wherein the cleaning and/or treatment unit comprises a plurality of said first protruding members (14a), arranged in a first spatial group (15a), and a plurality of said second protruding members (14b), arranged in a second spatial group (15b), the first group arranged spaced from the second group.

5. A cleaning and/or treatment unit (10) as claimed in any of claims 1-4, wherein each of the protruding members (14a, 14b) comprises a flexible material.

6. A cleaning and/or treatment unit (10) as claimed in claim 5, wherein each of the protruding members (14a, 14b) comprises one or more conductive electrode elements (18a, 18b), at least partially coated with a flexible polymer (19).

7. A cleaning and/or treatment unit (10) as claimed in claim 6, wherein the one or more conductive electrode elements (18a, 18b) of each protruding member (14a, 14b) include a distal portion (23) which is exposed at a distal end (22) of the protruding member, and at least a further portion which is coated by the flexible polymer.

8. A cleaning and/or treatment unit (10) as claimed in any of claims 1-7, wherein the cleaning and/or treatment unit comprises a plurality of bristles (42) for cleaning teeth, extending outward from the support surface (13) of the cleaning and/or treatment unit, and optionally wherein each of the first (14a) and second (14b) protruding members is surrounded by bristles (42).

9. An oral cleaning and/or treatment device (80), comprising:
an oral cleaning and/or treatment unit (10) as claimed in any of claims 1-8;
a mechanical oscillation mechanism (82) arranged to oscillate the support surface (13) of the cleaning and/or treatment unit at a first frequency, and wherein oscillation at said first frequency causes at least distal portions of the protruding members (14a, 14b) to oscillate laterally.

10. An oral cleaning and/or treatment device (80) as claimed in claim 9, wherein at least distal portions of the first (14a) and second (14b) protruding members exhibit a natural frequency of lateral oscillation relative to the proximal ends, and wherein, in at least a first operation mode, said first frequency of the mechanical oscillation mechanism is set at a frequency which is resonant with said natural frequency.

11. An oral cleaning and/or treatment device as claimed in claim 10, wherein in at least a further operation mode, said first frequency of the mechanical oscillation mechanism is set at a frequency which is non-resonant with the natural frequency, for example anti-resonant with the natural frequency.

12. An oral cleaning and/or treatment device (80) as claimed in any preceding claim, further comprising:
an RF generator (84) arranged to supply an alternating drive signal between the first (18a) and second (18b) electrodes, to induce an RF field in an area around and between the electrodes, to provide an oral cleaning function when the cleaning and/or treatment unit is received in an oral cavity.

13. An oral cleaning and/or treatment device (80) as claimed in claim 12, wherein the device further comprises a body portion (92) which houses the RF generator (84) and the mechanical oscillation mechanism (82), the body portion being mechanically and electrically coupled to the cleaning and/or treatment unit (10).

14. A method of forming a cleaning and/or treatment unit for an oral cleaning and/or treatment device, the method comprising:
providing a support body, having a support surface;
providing a first protruding member, extending outward from the support surface of the support body, and comprising one or more first electrodes
providing a second protruding member extending outward from the support surface of the support body, and comprising one or more second electrodes,
each of the first and second protruding members having a height dimension, extending between a proximal end of the member, connected to the support surface, and a distal end;
wherein at least one of the first and second protruding members is adapted to be flexible in a lateral dimension, perpendicular the height dimension of the member, to permit at least a distal end portion of the protruding member to flex or oscillate laterally relative to a proximal end of the member.

15. A method as claimed in claim 14, wherein providing the first protruding member and/or providing the second protruding member comprises:
configuring or selecting one or more of: a height of each protruding member, a material composition of each protruding member, a shape of each protruding member, and/or a mass distribution of each protruding member,
for thereby tuning a natural frequency of lateral oscillation of at least a distal portion of the protruding member about the proximal end of the protruding member, based on a pre-determined target natural frequency.
